# FASCICULE DE BREVET EUROPEEN

(11) **EP 2 304 738 B1**
(45) Date de publication et mention de la délivrance du brevet: **18.05.2016**
(21) Numéro de dépôt: 09753851.6
(22) Date de dépôt: 25.05.2009
(51) Int. Cl.: G21F 7/005, B65G 69/18

(54) **DOUBLE PORTE A TRANSFERT ETANCHE**
DOPPELWANDVERBINDUNG ZUR ABGEDICHTETEN KOMMUNIKATION ZWISCHEN BEHÄLTERN
DOUBLE PORT SEALING TRANSFER MECHANISM

(30) Priorité: 28.05.2008 FR 0853467
(43) Date de publication de la demande: 06.04.2011
(73) Titulaire: Glachet, Charles, 41100 Vendome (FR)
(72) Inventeur: Glachet, Charles, 41100 Vendome (FR)
(74) Mandataire: Ilgart, Jean-Christophe
(86) Numéro de dépôt international: PCT/EP2009/056301
(87) Numéro de publication internationale: WO 2009/144196

(56) Documents cités:
- FR-A- 2 725 188
- US-A- 4 821 875

## Description

La présente invention concerne un dispositif de transfert étanche d'un container vers une cellule comprenant une bride de cellule dans laquelle est montée une porte de cellule comportant un joint et une bride de container dans laquelle est montée une porte de container, le dispositif comportant des moyens pour solidariser la bride de container avec la bride de cellule.

On connait déjà des dispositifs de transfert étanche de ce type. Toutefois, ces dispositifs présentent un certain nombre d'inconvénients. Il existe un jeu entre la porte de cellule et la porte de container. Le volume délimité par ces portes n'est pas étanche sur une section annulaire très significative. Il est par conséquent contaminé car son atmosphère est l'atmosphère extérieure. De plus, il existe un risque de glissement de la porte de container par rapport à la porte de cellule. Enfin, pour un bon fonctionnement, ce dispositif doit être réalisé avec des tolérances de fabrication stricte, c'est-à-dire des tolérances de fabrication serrées n'admettant aucune dérogation par le service de métrologie.

On connait également déjà (FR 2 738 232) un autre dispositif de ce type. Dans ce dispositif on colle une partie de la paroi de la poche fermée de transfert sur une partie de l'enceinte. On découpe dans ladite partie de la paroi et par l'intérieur de l'enceinte l'ouverture d'une surface suffisante pour permettre le passage des articles, le pourtour de l'ouverture de la poche de transfert restant collée sur l'enceinte. On réalise une ouverture correspondante à l'enceinte puis on transfère les articles dans l'enceinte au travers des ouvertures. Une poche renfermant les composants ou les objets à transférer est mise dans une autre poche puis ces deux poches sont elles-mêmes enfermées dans une troisième poche externe. L'ensemble de ces emballages gigognes augmente de façon non négligeable : les manipulations, les déchets et les coûts. En outre, le système comporte des additifs tels qu'un film de protection adhésif, de l'adhésif sous forme de spray, ...etc., ceci augmente d'autant les interventions humaines et les risques s'y référant. Un nettoyage s'impose après chaque connexion pour ôter d'éventuelles traces d'adhésif et de paroi de la poche de transfert restant sur la fenêtre.

De plus, l'espace annulaire de part et d'autre de l'élément chauffant ou coupant forme deux chambres contaminées propageant cette contamination à l'intérieur de la poche de transfert au moment de la pénétration de l'élément chauffant.

On connait également (EP 0 586 307) un dispositif à double portes pour le transfert étanche entre deux volumes clos comportant un mécanisme de commande centralisé à sécurité incorporée. Ce mécanisme comprend un organe de commande mobile placé à l'opposé d'une charnière de l'une des portes en face d'une pièce liée à cette porte. Le mécanisme intègre quatre verrous mécaniques. Deux d'entre eux empêchent toute manoeuvre d'ouverture tant qu'une deuxième porte n'est pas présente et tant qu'une deuxième bride n'est pas entièrement raccordée à la bride portant l'organe de commande. Un troisième verrou empêche toute déconnexion des deux brides après franchissement d'une position intermédiaire de verrouillage par l'organe de commande. Enfin, un quatrième verrou évite le retour de l'organe de commande vers sa position initiale lorsque les portes sont ouvertes.

A noter que l'ensemble de ces verrous ne sont pas positifs dans le sens purement mécanique, leur action passe par l'intermédiaire de ressort rendant de ce fait aléatoire ce mécanisme de commandes centralisées à sécurités incorporées, pour un dispositif de transfert étanche entre deux volumes clos.

Dans la présente invention cet inconvénient est résolu par un système sécuritaire positif, si une phase n'est pas correctement réalisée il n'est pas possible de passer à la suivante.

Toutefois, un autre inconvénient du dispositif décrit ci-dessus réside par le fait qu'il existe un volume annulaire non étanche et par conséquent contaminé sous les premières lèvres du joint de porte de cellule.

On connait également (EP 0 537 117) un équipement destiné à former des connexions temporaires pour le transfert d'objet entre des volumes de confinement discontinu. Un connecteur oblong qui définit le passage à établir entre les deux volumes de confinement est présent dans la chambre de cellule. Une pièce de fermeture est reçue dans le connecteur. Elle comprend en particulier une structure annulaire rigide comportant un moyen de découpe emprisonné dans deux manchons relativement mou. Le bord coupant étant dirigé vers l'extérieur du confinement.

Une première membrane destinée à obturer la cellule est collée par adhésif sur le manchon extérieur. Cette membrane peut être découpée par le bord coupant formant les moyens de découpe annulaire.

Le container comprend un cadre qui définit une fente de passage fermée par une seconde membrane qui obture le container. Le cadre comprend une rainure annulaire destinée à recevoir les moyens de découpe annulaire. La seconde membrane adhère par son périmètre à la surface du cadre au moyen d'un adhésif. Une pièce de fermeture auxiliaire destinée à obturer la cellule après la fin de la communication entre les deux volumes confinés est prévue, par exemple dans le container.

Ce dispositif comporte les inconvénients suivants:
- les mêmes problèmes liés à l'utilisation d'adhésif, mise en oeuvre, nettoyage, etc.,
- la forme type oblong imposée par le transfert de l'opercule d'obturation de la cellule, complique sensiblement la réalisation de cet ensemble,
- la compression des manchons « élastiques » nécessite une mécanique d'accostage puissante car leur compression contrarie l'effacement de lame (effet cheville caoutchouc), - le système remplacement de l'opercule par un autre du type « pousse pousse » impose un glissement aisé d'ou risque de remontée de contamination de la partie intérieure masquée du connecteur par l'opercule en place,
- le transfert des différents objets impose des moyens de manipulation sur l'enceinte de transfert (le container),
- l'enlèvement de la double porte constituée des deux disques accolés par l'adhésif est délicat car elle se trouve emprisonnée par le manchon intérieur.

D'autre part, le document FR-A-2 725 188 décrit un dispositif de transfert étanche d'un container vers une cellule comprenant une bride de cellule dans laquelle est montée une porte de cellule (37) comportant un joint (59) et une bride de container (5) dans laquelle est montée une porte de container (6), le dispositif comportant des moyens (4, 81, 85) pour solidariser la bride de container avec la bride de cellule, la porte de cellule étant en deux parties, à savoir un couvercle (38) et une partie externe (39) formant porte joint pouvant se déplacer en translation par rapport au couvercle, des ressorts (55) étant interposés entre le couvercle (38) de la porte de cellule et la partie externe (39) de la porte de cellule.

La présente invention a précisément pour objet un dispositif de transfert étanche d'un container vers une cellule qui remédie à ces inconvénients. Ces buts sont atteints, conformément à l'invention, par le fait que la porte de cellule est en deux parties, à savoir un couvercle maintenu sur la bride par des moyens mécaniques et une partie flottante formant porte joint pouvant se déplacer en translation par rapport au couvercle, des ressorts étant interposés entre le couvercle de la porte de cellule et la partie flottante de la porte de cellule..

Grâce à ces caractéristiques on annule le jeu entre la porte de cellule et la porte de container et on assure un placage efficace du joint de la porte de cellule sur la porte de container, donc une excellente étanchéité du volume inter-porte pendant toute la durée du transfert. On élimine, grâce au placage de la porte de cellule sur la porte de container, tout risque de glissement par l'augmentation des frottements. De plus ce dispositif permet de s'affranchir de certaines tolérances de fabrication ou, du moins, de les élargir.

De préférence, la bride de container et la porte de container sont réalisées d'une seule pièce en un matériau aisément sécable et les moyens pour solidariser le container avec la bride de cellule sont constitués par des doigts du container s'engageant en rotation dans des rampes de la bride de cellule, la bride de cellule comportant des moyens de poinçonnage, la rotation suivant un premier angle de rotation du container par rapport à la bride de cellule provoquant l'avancée de container vers les moyens de poinçonnage et, par conséquent, la séparation par poinçonnage de la porte de container et de la bride de container, la poursuite de la rotation du container suivant un second angle de rotation provoquant le verrouillage de la porte de container sur la porte de cellule.

Grâce à ces caractéristiques additionnelles, on réalise une connexion de type unidirectionnel, c'est-à-dire à usage unique. L'intérieur du container peut être rendu entièrement stérile étant donné qu'il n'est à aucun moment mis en communication avec l'atmosphère extérieure. Cette connexion est en harmonie parfaite avec le développement durable pour les raisons suivantes:
- elle supprime les emballages de retour au fabricant ;
- elle supprime les transports à ce même fabricant ;
- elle supprime pour ce dernier les phases de nettoyage, de contrôle et d'essai nécessaires à la réutilisation de ce type de produit.
- elle permet le recyclage de la matière du container.

Avantageusement, l'un des doigts de la bride de container entraine en rotation un taquet, lequel entraine à son tour un verrou, directement ou indirectement, ce verrou étant apte à verrouiller et à déverrouiller la porte de cellule sur la bride de cellule, le taquet manoeuvrant le verrou dans le sens du déverrouillage lorsqu'il est actionné en rotation par l'un des doigts du container, le dispositif comportant un loquet apte à pivoter entre une première position dans laquelle la partie bombée de l'axe du premier galet maintient le loquet en dehors d'une encoche pratiquée dans le verrou, et une seconde position dans laquelle l'axe s'efface, permettant au loquet de pénétrer dans l'encoche du verrou, immobilisant ainsi en rotation le verrou lui-même, ainsi que le premier et le second pignon, et par conséquent le taquet.

Grâce à ces caractéristiques la porte de cellule est libérée de la bride de cellule en fin de verrouillage de la porte de cellule sur la porte de container par le doigt du container qui entraine en rotation le taquet. Par une action rotative sur le taquet, le doigt efface le verrou de la porte de cellule, ce qui permet l'ouverture de la double porte. La double porte libère le loquet qui immobilise le verrou de la porte de cellule, interdisant la rotation du taquet et empêchant le déverrouillage du container tant que les doubles portes sont ouvertes.

Des caractéristiques complémentaires optionnelles et/ou alternatives sont énumérées ci-après:
- le taquet entraine un arbre en rotation, cet arbre étant solidaire d'un premier pignon, ce premier pignon entraînant à son tour un second pignon de plus petit diamètre, ce second pignon entraînant le verrou.
- le couvercle comporte des doigts de maintien qui pénètrent dans des ouvertures oblongues formées dans le porte joint.
- les moyens de poinçonnage sont constitués par un poinçon amovible et interchangeable monté sur la bride de cellule et le poinçon est recouvert par deux joints qui le masquent en totalité.
- le dispositif comporte une couronne de maintien fixée sur la bride de container, cette couronne de maintient maintenant la porte de container à l'encontre de la force exercée par le poinçon.
- la porte de container comporte des encoches dans lesquelles sont reçues des excroissances de la couronne de maintien afin de maintenir la porte de container en rotation par rapport à la couronne de maintien.
- la porte de cellule comporte des oreilles et la porte de container comporte des rainures dans lesquelles les oreilles de la porte de cellule peuvent venir se loger afin de solidariser la porte de container avec la porte de cellule.
- le dispositif comporte une poignée mobile en rotation, un premier galet étant prévu dans le prolongement de la poignée, ce premier galet coulissant dans un pont de maintien de la poignée afin de la maintenir dans un plan et autoriser un débattement angulaire de la poignée, un second galet comportant une tête bombée étant prévu dans le prolongement du premier galet.
- le container comprend une goulotte interne constituée par une manche terminée par une fermeture, ladite goulotte évitant que des composants contenus dans le container puissent entrer en contact avec la tête du container et l'intérieur de la bride de cellule lors du transvasement de ceux-ci dans la cellule.
- la bride et la porte de cellule peuvent recevoir indifféremment soit un container à usage unique dit unidirectionnel, soit un container à usage multiple dit bidirectionnel.

D'autres caractéristiques et avantages de la présente invention apparaîtront encore à la lecture de la description qui suit d'un exemple de réalisation donné à titre illustratif en référence aux figures annexées.

Sur ces figures:
- les figures 1 et 2 sont deux représentations schématiques qui illustrent l'accouplement d'un container sur une cellule ;
- les figures 3A et 3B sont des vues générales en coupe d'un dispositif conforme à la présente invention ;
- la figure 4 est une vue de détail du poinçon amovible monté sur la bride de cellule ;
- les figures 5A et 5B sont des représentations de la couronne de maintien de la porte du container ;
- la figure 6 est une vue en coupe à échelle agrandie « de la fonction d'étanchéité » d'un container de l'art antérieur ;
- les figures 7A à 7C représentent trois étapes du fonctionnement du taquet par l'action d'un des six doigts de la bride de container ;
- la figure 8 est une vue de dessus du verrou de la porte de cellule ;
- les figures 9A et 9B sont des vues qui expliquent le fonctionnement du mécanisme du loquet de blocage du verrou ;
- les figures 10 et 11 représentent respectivement une vue de face de la poignée et une vue schématique en perspective illustrant le décollement de la double porte ;
- la figure 12 est une vue suivant la flèche XII de la figure 8 ;
- la figure 13 est une vue de détail qui montre un container à usage multiple ;
- la figure 14 est une vue schématique illustrant le verrouillage d'un container à usage multiple ;
- la figure 15 est une représentation schématique qui illustre l'étendue de l'invention.

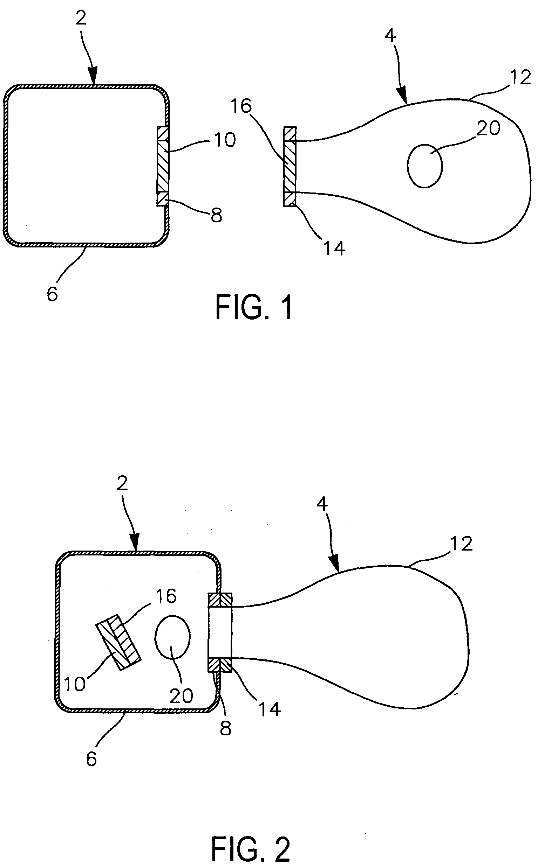

Sur la figure 1, la référence générale 2 désigne une cellule et la référence générale 4 un container. La cellule comporte une paroi 6 sur laquelle est montée une bride de cellule 8 à l'intérieur de laquelle on trouve une porte de cellule 10. Le container comporte une paroi 12 qui peut être une paroi rigide ou une paroi souple constituée par un sac. La paroi 12 est raccordée à une bride de container 14 à l'intérieur de laquelle on trouve une porte de container 16. Pour transférer un objet tel que 20 du container vers l'intérieur de la cellule, on accouple la bride de container sur la bride de cellule de manière étanche, comme représenté sur la figure 2. On solidarise la porte de cellule et la porte de container 16 et on les extrait des brides 8 et 14 pour les introduire à l'intérieur de la cellule, comme représenté sur la figure 2. On peut alors transférer l'objet 20 du container 4 vers la cellule 2.

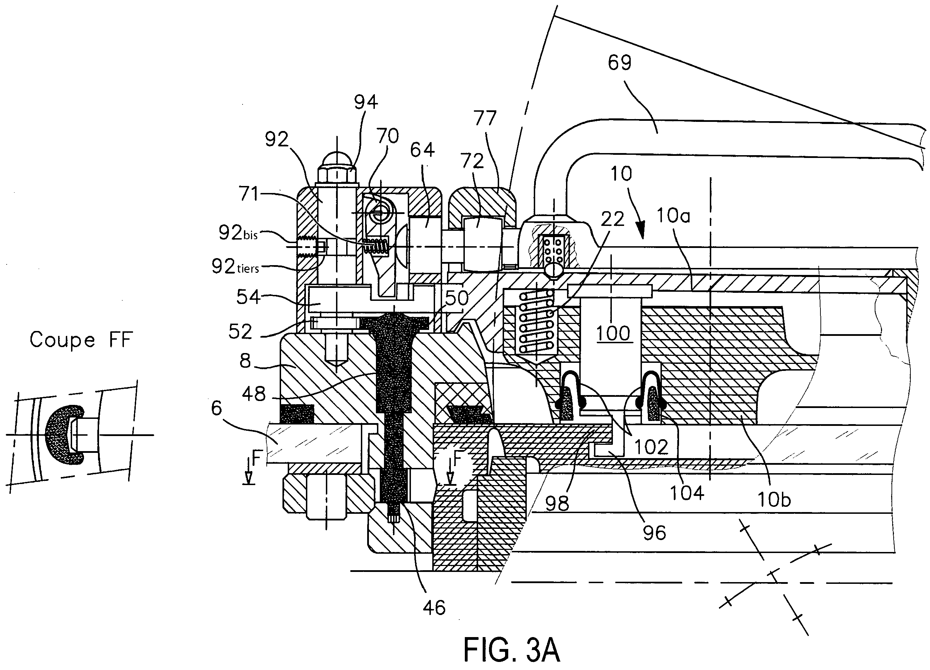

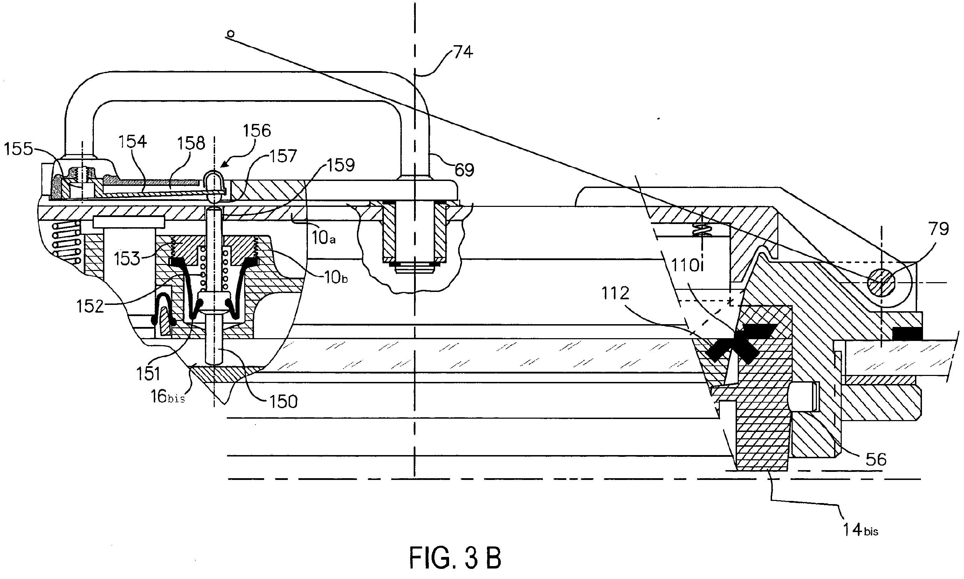

On a représenté sur les figures 3A et 3B des vues générales en coupe d'un dispositif conforme à la présente invention. Il comprend une bride de cellule 8 montée sur une paroi de cellule 6. Une porte de cellule 10 est montée à l'intérieur de la bride de cellule 8. La porte de cellule se compose d'une partie fixe 10a et d'une partie flottante 10b montée mobile par rapport à la partie fixe 10a. La partie fixe forme un couvercle maintenu sur la bride 8 par des moyens mécaniques. Des ressorts 22, par exemple au nombre de douze (pour assurer une bonne répartition de la poussée), sont interposés entre le couvercle 10a de la porte de cellule et la partie flottante 10b de la porte de cellule.

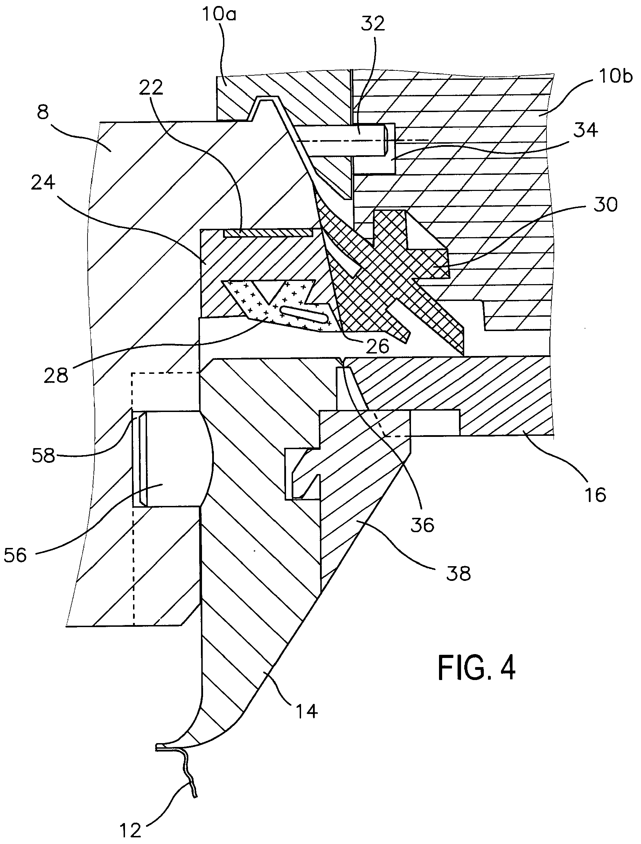

Comme on peut le voir plus précisément sur la figure 4, le dispositif comporte un poinçon 24 monté de manière étanche par le joint 22 et amovible sur la bride de cellule 8. Le poinçon 24 comporte un becquet 26 dirigé vers la porte de container 16. Le becquet 26 est entièrement recouvert par un premier joint 28 monté sur le poinçon 24 et par un second joint 30 monté sur la partie flottante 10b de la porte cellule. On évite ainsi la prolifération d'une éventuelle contamination de la partie du becquet opposée aux joints 28 et 30. Le couvercle 10a comporte des doigts de maintien 32, qui pénètrent dans les ouvertures oblongues 34 formées dans la partie flottante 10b de la porte de cellule 10. Les doigts de maintien 32 assurent : un préguidage en translation de la partie flottante de la porte de cellule par rapport au couvercle 10a et sa position angulaire.

La bride de container 14 et la porte de container 16 sont réalisées d'une seule pièce en un matériau aisément sécable. Ces deux parties sont reliées par une section affaiblie 36 présentant une moindre épaisseur, par exemple 1,5 mm. Lors de l'avancée du container sur le becquet 26, la partie de plus faible épaisseur 36 est découpée, ce qui a pour effet de séparer la porte de container 16 de la bride de container 14.

Afin de fournir une réaction à la force exercée par le becquet 26 sur la porte de container 16, le dispositif comporte une couronne de maintien 38 clipée de façon indémontable et indexée angulairement sur la bride de container 14. Cette couronne de maintien 38 maintient la porte de container à l'encontre de la force exercée par le becquet 26. On observe également que la bride de container 14 possède des doigts 56, par exemple au nombre de six, qui pénètrent dans des rampes correspondantes de la bride de cellule 8.

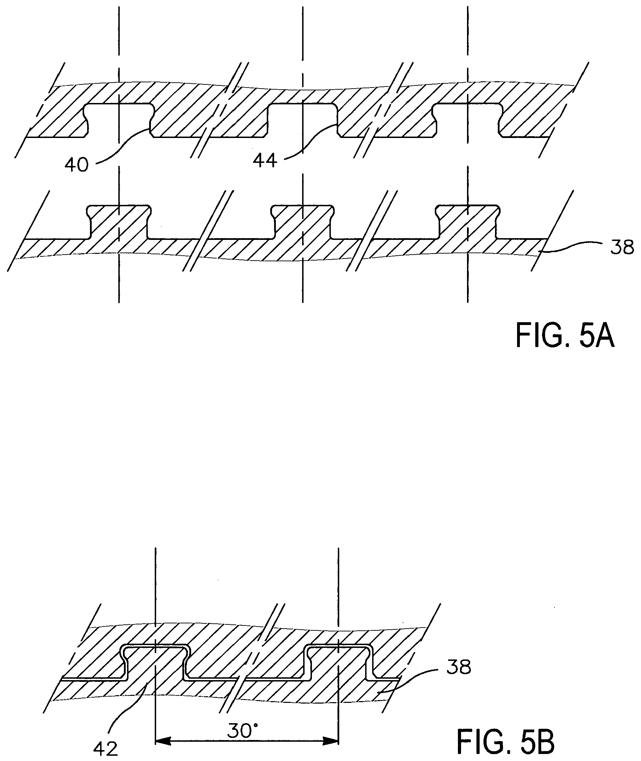

On a représenté sur les figures 5A et 5B le système de maintien entre la couronne et la porte de container. La future porte de container possède 12 encoches, huit encoches 44 de profil droit et quatre encoches 40 qui ont un profil légèrement différent pour obtenir un point dur ou un léger clipage vis-à-vis des 12 tenons 42 de la couronne de maintien 38, interdisant toute rotation de la porte de container 16 vis-à-vis de la bride de container 14 au moment du poinçonnage et de son verrouillage sur la porte de cellule. Sur la figure 5A, la couronne de maintien 38 et la porte de container ont été représentées espacées l'une de l'autre, tandis que sur la figure 5B, les tenons 42 sont disposés à l'intérieur des encoches 40 et 44 de la porte de container.

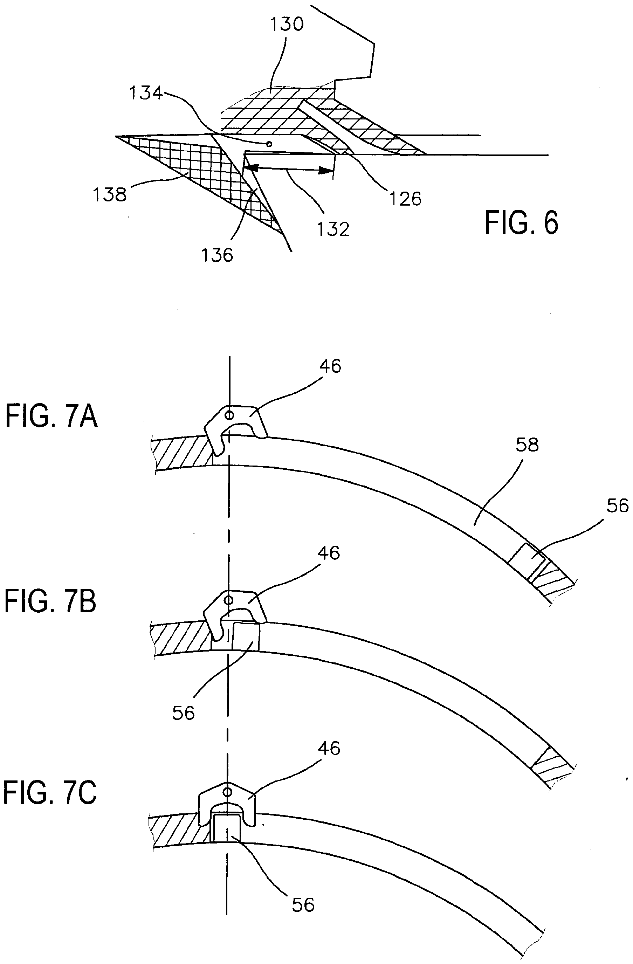

On a représenté sur la figure 6 une vue en coupe à échelle agrandie « de la fonction d'étanchéité » d'un ensemble container cellule de l'art antérieur. Ce croquis montre qu'il existe un jeu entre la porte de container et la porte de cellule. Ce jeu est dit d'inter-porte. Il ne peut pas être évité à cause des tolérances de fabrication nécessaires au fonctionnement des verrouillages par rotation. Par suite de l'existence de ce jeu inter-porte, la première lèvre 126 du joint 130 porte sur la porte de container à une distance 132 de l'extrémité de la porte de container. Ceci se traduit par l'apparition d'un volume annulaire non étanche et contaminé 134 également appelé zone d'incertitude. De la même manière il existe un volume non étanche 136 entre la porte de container et la portée sur cette porte du joint 138 de la bride de container. Ces volumes sont très significatifs. A titre d'exemple, pour un diamètre nominal de 270 mm, la zone d'incertitude présente une surface d'environ 16000 mm2. Dans le cadre de l'invention les jeux 134 et 136 sont annulés grâce à la compression du joint 30 sur la porte de container par l'effet des ressorts 22.

Le dispositif de l'invention comporte également un mécanisme de sécurité qui a pour fonction d'empêcher le déverrouillage prématuré de la porte de cellule. Ce mécanisme comporte un taquet 46 (voir figure 3A). Le taquet est monté sur un arbre 48 (étanche par un joint annulaire logé dans une gorge de l'arbre et l'alésage dans le corps de la bride de cellule) à l'extrémité duquel se trouve un pignon de grand diamètre 50. Le pignon de grand diamètre 50 engrène avec un pignon 52 de plus petit diamètre, de manière à obtenir une démultiplication de l'angle de rotation du taquet 46. A titre d'exemple, le rapport entre les pignons 50 et 52 est égal à 1,8. Ainsi, lorsque le taquet 46 tourne d'un angle égal à 25°, le pignon 52 tourne d'un angle égal à 25° multiplié par 1,8 soit 45°. Le pignon 52 est solidaire du verrou 54, qu'il entraine en rotation d'un angle de 45°.

On a représenté sur les figures 7A à 7C, trois étapes de la rotation du taquet 46. Un doigt 56 de la bride de container coulisse dans une rampe 58 de la bride de cellule. Sur la figure 7A, le doigt 56 est éloigné du taquet 46. Sur la figure 7B, le doigt 56 entre en contact avec le taquet 46. Toutefois, la rotation du taquet n'a pas encore commencé. Sur la figure 7C, le doigt de bride de container 56 a atteint l'extrémité de la rampe de bride de cellule. Il a entrainé dans sa course le taquet 46 en rotation. Le taquet 46 a basculé d'un angle égal à 25°, ce qui correspond, comme on l'a expliqué précédemment, à une rotation de 45° du verrou 54.

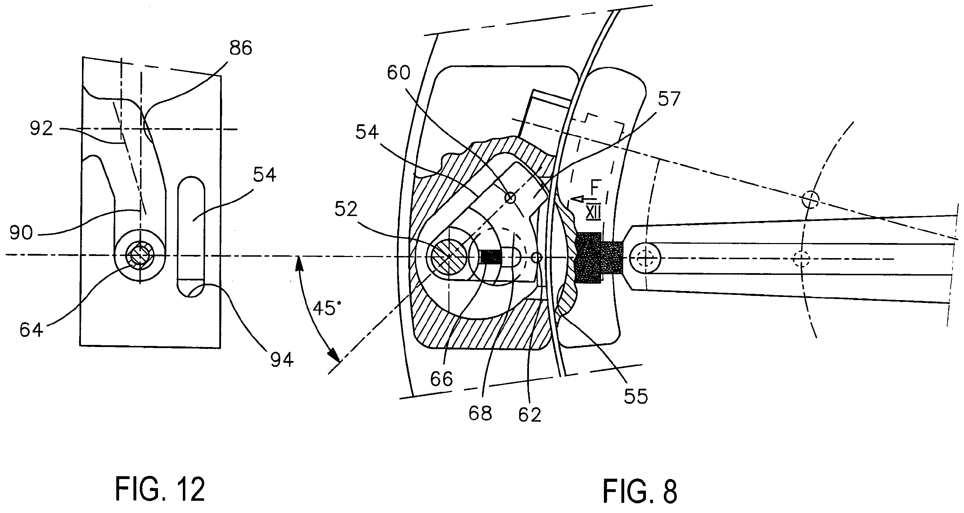

On a représenté sur la figure 8, une vue de dessus du verrou de la porte de cellule. Ce verrou 54 comporte un pêne 57. Ce pêne peut pivoter entre une position dégagée représentée sur la figure 8, dans laquelle le verrou libère la porte de cellule et une position engagée (non représentée) dans laquelle le verrou pivote de 45° dans le sens des aiguilles d'une montre, pour pénétrer dans une encoche 55, immobilisant ainsi la porte de cellule par rapport à la bride de cellule. Le verrou comporte une première empreinte de point dur 60 et une seconde empreinte de point dur 62. Ces empreintes sont destinées à rendre stables les positions ouverte et fermée du verrou.

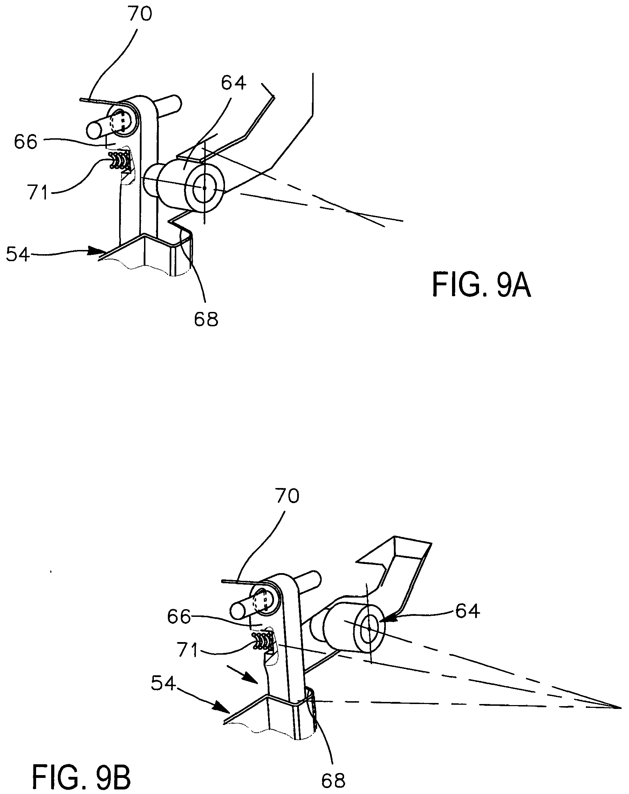

Les figures 9A et 9B sont des vues qui expliquent le fonctionnement du mécanisme du loquet de blocage du verrou. Dans la position porte de cellule plaquée sur la bride de cellule, le galet 64 possédant une extrémité bombée maintient le loquet 66 effacé, permettant au verrou 54 de pivoter librement. Lors de la manoeuvre de la poignée 69 (voir figure 3A) environ dans les 10 premiers millimètres de l'arc de cercle de la poignée 69, le bombé du galet 64 libère le loquet 66, qui vient se loger dans une encoche 68 (voir figure 9B) du verrou 54, sous l'action de deux ressorts, à savoir un ressort 70 de type épingle et un ressort 71 de compression. Le doublage des ressorts permet de répondre à la défaillance éventuelle d'un des ressorts et permet d'assurer le côté sécuritaire, assurant dans ce cas le côté positif. Le loquet 66 immobilise ainsi en rotation le verrou 54, le pignon 52, le pignon 50 et, par conséquent, le taquet 46, interdisant le déverrouillage du container 14 par l'un des doigts 56. Ainsi, on interdit le déverrouillage du container tant que les double portes sont ouvertes.

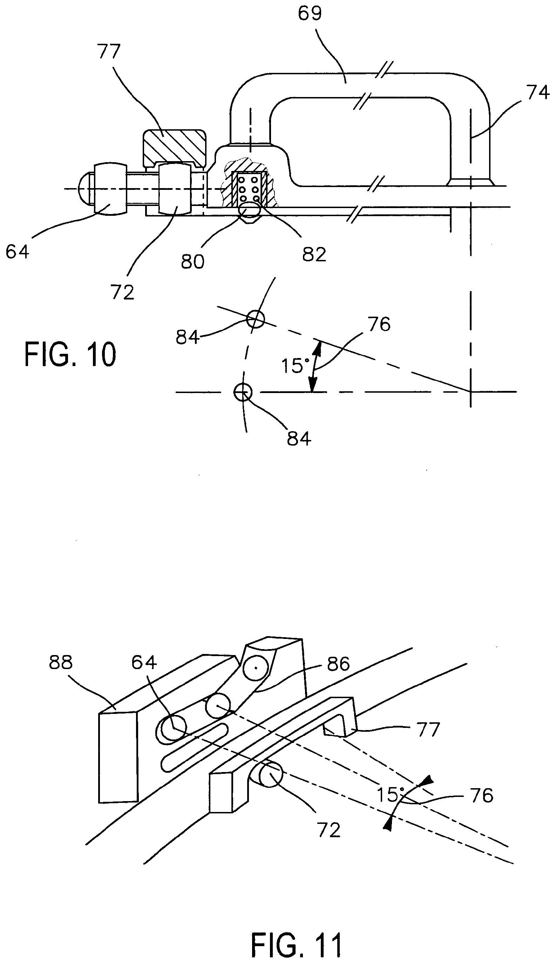

On a représenté sur les figures 10 et 11 respectivement une vue de face de la poignée et une vue schématique en perspective illustrant le décollement de la double porte.

Sur la figure 10, la poignée 69 est montée pivotante à l'une de ses extrémités autour d'un axe 74 qui coïncide avec l'axe de la porte de cellule. Un premier galet 64, déjà décrit précédemment, et un second galet 72 sont montés dans le prolongement de la poignée 69. Ce second galet 72 passe sous un pont de maintien de la poignée 69. Cette pièce est fixée sur la partie fixe de la porte de cellule.

La poignée pivote d'un angle 76, égal à 15°. Des billages formant des points durs sont prévus aux deux extrémités de cet angle de 15°. Ces billages sont constitués par une bille 80 poussée par un ressort 82 dans une empreinte 84.

Sur la figure 11, le premier galet 64 coulisse dans une rampe 86, formé dans un bloc sécuritaire 88. La rampe 86 comporte une première partie horizontale, c'est-à-dire parallèle au plan de la porte de cellule et une seconde partie inclinée par rapport à ce même plan. La partie inclinée sert au décollement de la double porte et à vaincre les clipages entre la porte de container et la bride de container (voir figures 5A et 5B).

On observe également, sur cette figure, la forme du pont de maintien 77, qui empêche le second galet 72 de se soulever.

On a représenté sur la figure 12, une vue suivant la flèche XII de la figure 8. Cette figure permet de mieux apprécier la forme de la rampe 86 constituée d'une partie 90 parallèle au plan de la porte de cellule et d'une partie 92 inclinée par rapport à la partie 90. En-dessous du premier galet 64, on peut apercevoir le verrou 54 à travers une lumière 94.

En se référant à nouveau à la figure 3A, on note la présence d'une commande de secours. Cette commande est constituée par une tige 92 terminée par un six pans 94 l'arrêt en translation de la tige 92 est assuré par une vis à téton 92 bis se logeant dans une gorge 92 Tiers sur la tige 92. On peut, ainsi, en cas de besoin, manoeuvrer le verrou si celui reste bloqué.

On note également la présence des six oreilles mâles 96, venant se glisser sous les six oreilles femelles 98, pour assurer la solidarisation de la porte de cellule et de la porte de container. Les six oreilles des six colonnes 100 font corps à la partie fixe 10a de la porte de cellule. Elles permettent la translation guidée de la partie flottante 10b de la porte de cellule dans une mesure limitée (par exemple 1,5 mm). Cette translation correspond à la course de poinçonnage, l'effacement de la partie flottante 10b est faite par la poussée de la porte de container 16. Six soufflets 102 sont prévus pour assurer une étanchéité entre les six colonnes 100 et la partie flottante 10b de la porte de cellule. Six bagues 104 en matière plastique maintiennent une extrémité des soufflets 102 en appuis contre la paroi de la porte de cellule.

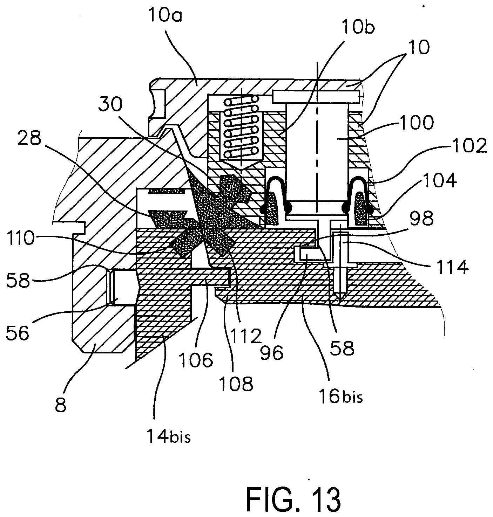

On a représenté sur la figure 13 une vue d'un container à usage multiple raccordé sur la même bride et porte de cellule. Il comporte une porte de container 16 bis raccordée à une bride de container 14 bis par des oreilles (femelles) 106 venues de la bride de container 14 bis et par des oreilles (mâles) 108 de la porte de container. Des doigts 56 de la bride de container, par exemple au nombre de six, s'engagent dans les six rampes 58 correspondantes formées dans la bride de cellule 8. Un joint 110 est monté dans la bride de container, un joint d'étanchéité 112 est monté dans la porte de container. Le joint 110 et le joint 112 sont en contact avec les joints 28 et 30 déjà décrit, de la bride de cellule et de la porte de cellule. Les joints assurent l'étanchéité entre la porte de cellule et la bride de cellule, entre la porte de cellule et la porte de container, entre la bride de cellule et la bride de container. Ils assurent également l'étanchéité entre la partie flottante 10b et la partie fixe 10a par l'intermédiaire des soufflets 102 de la porte de cellule.

Des pions 114, par exemple au nombre douze, servent à limiter le mouvement dans les deux sens (sens horaire et antihoraire) des oreilles mâles 96 de la porte de cellule.

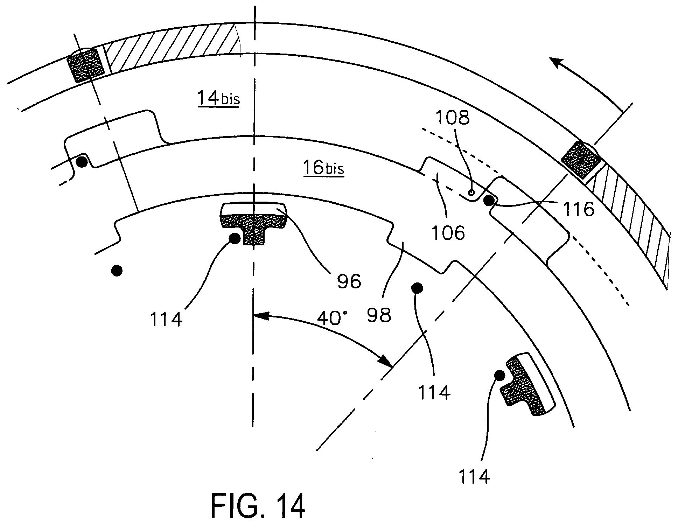

On a représenté sur la figure 14 une vue schématique illustrant le verrouillage d'un container à usage multiple, bidirectionnel, sous la bride de la porte de cellule recevant les containers à usage unique. Dans ce cas, la bride de container est équipée d'une porte de container indépendante qui est réalisée dans une matière telle que l'acier, l'aluminium, une matière plastique rigide, etc. La porte de container 16 bis est verrouillée sur la bride de container par une rotation dans le sens inverse des aiguilles d'une montre (en regardant le container en vue de dessus). L'arrêt de la rotation de la porte de container par rapport à la bride de container est obtenu par des pions d'arrêt 116. Dans cette position, six oreilles mâles 108 de la porte de container sont introduites sous six oreilles femelles 106 de la bride de container. Dans un premier temps on verrouille la porte de container sur la porte de cellule, puis dans un deuxième temps, on déverrouille la porte de container de sa bride de container. La porte de container du container à usage multiple comporte d'autre part des oreilles internes (femelles) 98 qui viennent se verrouiller sur l'extrémité 96 des colonnes 100 de la porte de cellule. Cette porte de container possède des pions 114 assurant les butées nécessaires au cours des différents verrouillages.

Le fonctionnement du dispositif est le suivant.

Dans la position de départ, la porte de cellule est fermée sur sa bride de cellule et le container porte fermée est à l'extérieur non connecté. Le taquet 46 est effacé et incliné de 25° prêt à recevoir un des six doigts de la bride de container. Le verrou 54 est enclenché dans la rainure 55 de la porte de cellule. Le loquet 66 est effacé par le bombé du galet 64.

Durant la phase de connexion du container à usage unique, les six doigts 56 de la bride de container s'engagent dans les six rampes correspondantes de la bride de cellule. Pendant les 20 premiers degrés de la rotation du container dans le sens horaire en regardant le container de l'arrière vers la cellule par rapport à la cellule, il y a une phase d'approche d'accostage et une phase de « poinçonnage » devenant pour le container à usage multiple, bidirectionnel, une phase d'effacement de la partie mobile 10b de la porte de cellule. Pendant les 15 degrés suivants il y a une phase de prise en charge de la porte de container par la porte de cellule. Dans les 5 derniers degrés environ il y a pivotement du taquet 46 sous l'action d'un des six doigts de la bride de container. Cela a pour conséquence le pivotement de l'axe 48 du même angle de rotation que le taquet 46, puis l'entraînement en rotation des pignons 50 et 52. Le verrou est entrainé par le pignon 52 dont il est solidaire. Il libère la porte de cellule permettant d'actionner angulairement la poignée 69 d'un angle de 15° environ. La poignée 69, dans un premier temps, libère le loquet 66 par une course de dix millimètres environ dans la partie horizontale de la rampe. Le loquet 66 vient s'engager dans une encoche 68 prévue dans le verrou 54, sous l'effet d'un des deux ressorts l'un de type épingle, l'autre de type à compression 71. Il y a ensuite extraction de la double porte par la rotation de la poignée 69 dans le sens horaire. Il y a ensuite ouverture totale par pivotement de la porte de cellule autour de l'axe de la charnière 79.

Dans le cas du container à usage multiple la position de départ est la même, étant entendu que la porte de container est verrouillée sur la bride de container.

On engage de la même manière les six doigts de la bride de container dans les six rampes correspondantes de la bride de cellule. Pendant les 20 premiers degrés de rotation, se produit le verrouillage de la porte de container sur la porte de cellule puis le déverrouillage de la porte de container de la bride de container.

En fin de verrouillage, il y a basculement du taquet 46 et libération de la porte de cellule de la bride de cellule. Il convient de noter la possibilité d'ajouter une sécurité complémentaire dite d'inter-porte, signalant la présence de la porte de container et autorisant la libération de la poignée 69 uniquement s'il y a cette présence (voir figure 3B). Cette sécurité complémentaire ne gêne en rien à l'utilisation du container à usage unique.

Cette sécurité comprend un palpeur 150 toujours rappelé vers la porte de container par un ressort 152. L'étanchéité est assurée par un soufflet 151 monté à une extrémité dans une gorge sur le palpeur et de l'autre extrémité en appui dans le fond d'un alésage exécuté dans la partie flottante 10b de la porte de cellule, un écrou 153 assure le maintien du soufflet.

La poignée 69 possède un logement 158 qui reçoit une lame de ressort 154 fixée dans la poignée par une vis 155.

L'extrémité de cette lame a un téton 157 qui se loge dans un trou 159 dans le couvercle 10a de la porte de cellule, à 15° une empreinte (non représentée) permet la stabilité de la poignée 69 en position double porte ouverte, à l'opposé du téton un petit anneau permet à l'aide d'un crochet spécifique d'assurer une commande de secours.

Lors de la connexion du container en fin de phase d'approche la porte de container pousse le palpeur vers le haut, ce qui a pour effet de pousser le téton 157 et de l'effacer de son logement 159 permettant ainsi le pivotement de la poignée 69 libérée du couvercle (partie fixe) 10a de la porte de cellule.

Ensuite, comme pour le container à usage unique il y a extraction de la double porte par rotation de la poignée 69 de 15° degrés dans le sens horaire et puis ouverture totale par pivotement autour de l'axe de la charnière 79 des deux double portes accolées.

Le processus inverse permet d'effectuer la déconnexion du container de la bride de cellule.

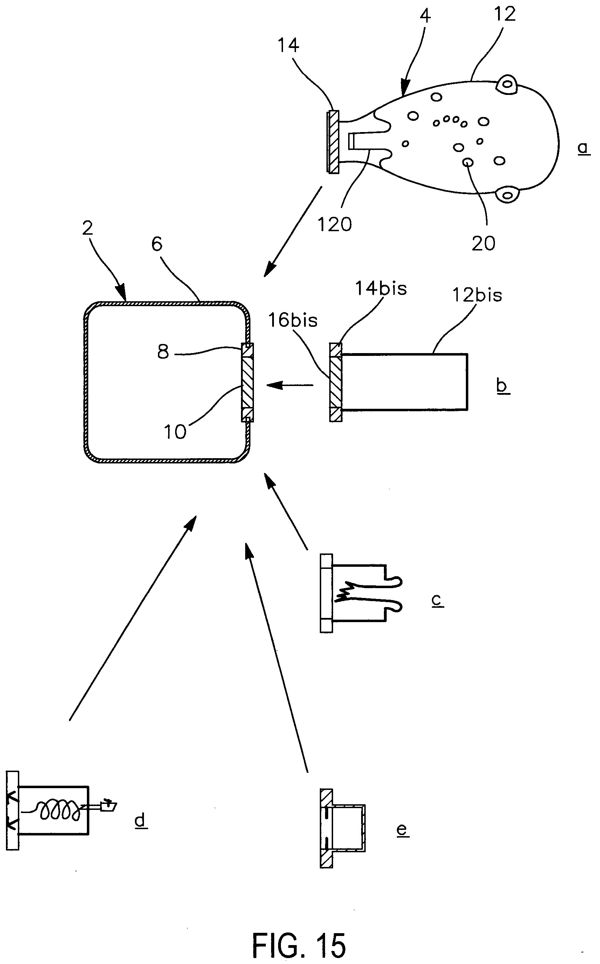

On a représenté sur la figure 15 plusieurs schémas qui illustrent les diverses applications possibles de l'invention. En a) on a représenté un container souple jetable à usage unique. Le container comporte une goulotte 120 qui permet d'éviter que les objets 20 présents dans le container ne touchent les parois du container et de la bride de cellule. En b) on a représenté un container à usage multiple et en c) un container de nettoyage de la zone d'incertitude. Ce container s'utilise porte de cellule fermée. L'invention s'applique également au cas d) de containers spécifiques divers (autoclavables, vapeur fluente, passage fluidique, transfert de poudre, etc.) enfin, en e) l'invention concerne un container de stérilisation de l'enceinte. Ce container ne comporte pas de porte de container. Il permet l'ouverture de la porte de cellule et la stérilisation de ses parties cachées.

## Revendications

1. Dispositif de transfert étanche d'un container vers une cellule comprenant une bride de cellule (8) dans laquelle est montée une porte de cellule (10) comportant un joint et une bride de container (14) dans laquelle est montée une porte de container (16), le dispositif comportant des moyens pour solidariser la bride de container avec la bride de cellule, la porte de cellule (10) étant en deux parties, à savoir un couvercle (10a) et une partie flottante (10b) formant porte joint pouvant se déplacer en translation par rapport au couvercle (10a), des ressorts (22) étant interposés entre le couvercle (10a) de la porte de cellule et la partie flottante (10b) de la porte de cellule, **caractérisé en ce que** le couvercle (10a) est maintenu sur la bride de cellule (8) par des moyens mécaniques.

2. Dispositif de transfert étanche selon la revendication 1, **caractérisé en ce que** la bride de container (14) et la porte de container (16) sont réalisées d'une seule pièce en un matériau aisément sécable et **en ce que** les moyens pour solidariser le container avec la bride de cellule sont constitués par des doigts (56) du container s'engageant en rotation dans des rampes (58) de la bride de cellule, la bride de cellule comportant des moyens de poinçonnage (24, 26), la rotation suivant un premier angle de rotation du container par rapport à la bride de cellule (8) provoquant l'avancée de container vers les moyens de poinçonnage (24, 26) et, par conséquent, la séparation par poinçonnage de la porte de container (16) et de la bride de container (14), la poursuite de la rotation du container suivant un second angle de rotation provoquant le verrouillage de la porte de container sur la porte de cellule.

3. Dispositif de transfert étanche selon la revendication 1 ou 2, **caractérisé en ce que** l'un des doigts (56) de la bride de container entraine en rotation un taquet (46), lequel entraine à son tour un verrou (54), directement ou indirectement, ce verrou (54) étant apte à verrouiller et à déverrouiller la porte de cellule (10) sur la bride de cellule (8), le dispositif comportant un loquet (66) apte à pivoter entre une première position dans laquelle un axe (64) maintient le loquet (66) en dehors d'une encoche (68) pratiquée dans le verrou (54), et une seconde position dans laquelle l'axe (64) s'efface, permettant au loquet (66) de pénétrer dans l'encoche (68) du verrou, immobilisant ainsi en rotation le verrou lui-même, ainsi que le premier et le second pignon, et par conséquent le taquet (46).

4. Dispositif de transfert étanche selon la revendication 3, **caractérisé en ce que** le taquet (46) entraine un arbre (48) en rotation, cet arbre (48) étant solidaire d'un premier pignon (50), ce premier pignon (50) entrainant à son tour un second pignon (52) de plus petit diamètre, ce second pignon entrainant le verrou (54).

5. Dispositif de transfert étanche selon l'une des revendications 1 à 4, **caractérisé en ce que** le couvercle comporte des doigts de maintien (32) qui pénètrent dans des ouvertures oblongues (34) formées dans la partie flottante (10a) de la porte de cellule.

6. Dispositif de transfert étanche selon l'une des revendications 2 à 5, **caractérisé en ce que** les moyens de poinçonnage sont constitués par un poinçon amovible et interchangeable (24) monté de façon étanche sur la bride de cellule et **en ce que** le poinçon est recouvert par deux joints (28, 30) qui le masquent en totalité.

7. Dispositif de transfert étanche selon la revendication 6, **caractérisé en ce qu'**il comporte une couronne de maintien (38) fixée par clipage irréversible sur la bride de container (14), cette couronne de maintient (38) maintenant la porte de container (16) à l'encontre de la force exercée par le poinçon.

8. Dispositif de transfert étanche selon la revendication 7, **caractérisé en ce que** la porte de container (16) comporte des encoches dans lesquelles sont reçues des excroissances (42) de le couronne de maintien (38) afin de maintenir la porte de container en rotation par rapport à la couronne de maintien.

9. Dispositif de transfert étanche selon l'une des revendications 1 à 8, **caractérisé en ce que** la porte de cellule comporte des oreilles (96) et **en ce que** la porte de container comporte des rainures (98) dans lesquelles les oreilles (96) de la porte de cellule peuvent venir se loger afin de solidariser la porte de container (16) avec la porte de cellule (10).

10. Dispositif de transfert étanche selon l'une des revendications 8 ou 9, **caractérisé en ce qu'**il comporte une poignée (69) mobile en rotation, un premier galet étant prévu dans le prolongement de la poignée, ce premier galet (72) coulissant dans un pont de maintien (77) de la poignée afin de la maintenir dans un plan et autoriser un débattement angulaire de la poignée, un second galet (64) comportant une tête bombée étant prévu dans le prolongement du premier galet (72).

11. Dispositif de transfert étanche selon l'une des revendications 1 à 10, **caractérisé en ce que** le container comprend une goulotte interne (120) constituée par une manche terminée par une fermeture, ladite goulotte évitant que des composants (20) contenus dans le container puissent entrer en contact avec la tête du container lors du transvasement de ceux-ci dans la cellule.

12. Dispositif de transfert étanche selon l'un des revendications 1 à 11, **caractérisé en ce que** la bride et la porte de cellule peuvent recevoir indifféremment soit un container à usage unique dit unidirectionnel soit un container à usage multiple dit bidirectionnel.

## Patentansprüche

1. Vorrichtung zum dicht abgeschlossenen Transfer aus einem Behälter in eine Zelle, aufweisend einen Zellenflansch (8), in dem eine Zellentür (10) montiert ist, die eine Dichtung aufweist, und einen Behälterflansch (14), in dem eine Behältertür (16) angebracht ist, wobei die Vorrichtung Einrichtungen aufweist, um den Behälterflansch mit dem Zellenflansch fest zu verbinden, wobei die Zellentür (10) zweiteilig ausgebildet ist, nämlich aus einem Deckel (10a) und einem schwimmend angebrachten Teil (10b), der einen Dichtungshalter bildet und sich translativ bezüglich des Deckels (10a) bewegen kann, wobei Federn (22) zwischen dem Deckel der Zellentür und dem schwimmend angebrachten Teil (10b) der Zellentür angeordnet sind, **dadurch gekennzeichnet, dass** der Deckel (10a) auf dem Zellenflansch (8) durch mechanische Einrichtungen gehalten wird.

2. Vorrichtung zum dicht abgeschlossenen Transfer nach Anspruch 1, **dadurch gekennzeichnet, dass** der Behälterflansch (14) und die Behältertür (16) einstückig und aus einem leicht teilbaren Material ausgebildet sind und dass die Einrichtungen zur festen Verbindung des Behälters mit dem Zellenflansch durch Finger (56) des Behälters gebildet sind, die durch Drehung in Eingriff mit Auflaufflächen (58) des Zellenflansches kommen, wobei der Zellenflansch Einstecheinrichtungen (24, 26) aufweist, und wobei das Drehen gemäß einem ersten Drehwinkel des Behälters bezüglich des Zellenflanschs (8) das Vorrücken des Behälters hin zu Einstecheinrichtungen (24, 26), und demzufolge ein mittels Einstechen erfolgendes Trennen der Behältertür (16) und des Behälterflansches (14) bewirkt, und eine Fortführung des Drehens des Behälters gemäß einem zweiten Drehwinkel das Verriegeln der Behältertür auf der Zellentür bewirkt.

3. Vorrichtung zum dicht abgeschlossenen Transfer nach Anspruch 1 oder 2, **dadurch gekennzeichnet, dass** einer der Finger (56) des Behälterflansches einen Mitnehmer (46) drehend antreibt, der seinerseits, direkt oder indirekt, einen Riegel (54) antreibt, wobei der Riegel (54) ausgebildet ist, die Zellentür (10) auf dem Zellenflansch (8) zu verriegeln oder zu entriegeln, wobei die Vorrichtung eine Klinke (66) aufweist, die ausgebildet ist, zwischen einer ersten Position, in der eine Achse (64) die Klinke (66) außerhalb einer in dem Riegel (54) ausgesparten Nut (68) hält, und einer zweiten Position zu schwenken, in welcher die Achse (64) zurücktritt, was ermöglicht, dass die Klinke (66) in die Nut (68) des Riegels eindringt, und auf diese Weise eine Drehungsblockierung des Riegels selbst, sowie des ersten und des zweiten Ritzels, und demzufolge des Mitnehmers (46) bewirkt.

4. Vorrichtung zum dicht abgeschlossenen Transfer nach Anspruch 3, **dadurch gekennzeichnet, dass** der Mitnehmer (46) eine Welle (48) drehend antreibt, wobei die Welle (48) mit einem ersten Ritzel (50) fest verbunden ist, wobei das erste Ritzel (50) seinerseits ein zweites Ritzel (52) von kleinerem Durchmesser antreibt, wobei dieses zweite Ritzel den Riegel (54) antreibt.

5. Vorrichtung zum dicht abgeschlossenen Transfer nach einem der Ansprüche 1 bis 4, **dadurch gekennzeichnet, dass** der Deckel Haltefinger (32) aufweist, die in längliche Öffnungen (34) eindringen, welche in dem schwimmend angebrachten Teil (10a) der Zellentür ausgebildet sind.

6. Vorrichtung zum dicht abgeschlossenen Transfer nach einem der Ansprüche 2 bis 5, **dadurch gekennzeichnet, dass** die Einstecheinrichtungen durch einen abnehmbaren und austauschbaren Stichel (24) gebildet sind, der an dem Zellenflansch in dichter Weise montiert ist, und dass der Stichel durch zwei Dichtungen (28, 30) abgedeckt ist, die diesen vollständig verdecken.

7. Vorrichtung zum dicht abgeschlossenen Transfer nach Anspruch 6, **dadurch gekennzeichnet, dass** sie eine Haltekrone (38) aufweist, die mittels einer irreversiblen Clip-Verbindung an dem Behälterflansch (14) befestigt ist, wobei die Haltekrone (38) die Behältertür (16) entgegen der durch den Stichel ausgeübten Kraft festhält.

8. Vorrichtung zum dicht abgeschlossenen Transfer nach Anspruch 7, **dadurch gekennzeichnet, dass** die Behältertür (16) Nuten aufweist, in denen Vorsprünge (42) der Haltekrone (38) aufgenommen sind, um die Behältertür drehbar bezüglich der Haltekrone zu halten.

9. Vorrichtung zum dicht abgeschlossenen Transfer nach einem der Ansprüche 1 bis 8, **dadurch gekennzeichnet, dass** die Zellentür Lappen (96) aufweist und dass die Behältertür Rillen (98) aufweist, in denen die Lappen (96) der Zellentür Aufnahme finden können, um die Behältertür (16) mit der Zellentür (10) fest zu verbinden.

10. Vorrichtung zum dicht abgeschlossenen Transfer nach einem der Ansprüche 8 oder 9, **dadurch gekennzeichnet, dass** sie einen drehbar angebrachten Griff (69) aufweist, wobei eine erste Rolle in der Verlängerung des Griffs vorgesehen ist, und wobei die erste Rolle (72) in einer Griffhaltebrücke (77) gleitend verschieblich ist, um diese in einer Ebene zu halten und eine Winkelbewegung des Griffes zuzulassen, wobei eine zweite Rolle (64) einen bauchigen Kopf aufweist, der in der Verlängerung der ersten Rolle (72) vorgesehen ist.

11. Vorrichtung zum dicht abgeschlossenen Transfer nach einem der Ansprüche 1 bis 10, **dadurch gekennzeichnet, dass** der Behälter eine innenliegende Ablaufrinne (120) aufweist, die durch eine mittels eines Abschlusses verschlossene Hülse gebildet ist, wobei die Ablaufrinne verhindert, dass im Behälter befindliche Bestandteile (20), während des Umfüllens von diesen in die Zelle, in Kontakt mit dem Behälterkopf kommen können.

12. Vorrichtung zum dicht abgeschlossenen Transfer nach einem der Ansprüche 1 bis 11, **dadurch gekennzeichnet, dass** der Flansch und die Zellentür gleichermaßen sowohl einen Behälter zur einmaligen Verwendung, einen sogenannten Einwegbehälter, als auch einen Behälter zur mehrmaligen Verwendung, einen sogenannten Zweiwegbehälter, aufnehmen können.

## Claims

1. A sealing transfer device from a container to a cell comprising a cell flange (8) in which is mounted a cell door (10) including a gasket and a container flange (14) in which is mounted a container door (16), the device including means for securing the container flange with the cell flange, the cell door (10) being in two portions, i.e. a lid (10a) and a floating portion (10b) forming a door gasket which may translationally move relatively to the lid (10a), springs (22) being interposed between the lid (10a) of the cell door and the floating portion (10b) of the cell door, **characterized in that** the lid (10a) is maintained on the cell flange (8) by mechanical means.

2. The sealing transfer device according to claim 1, **characterized in that** the container flange (14) and the container door (16) are made in one piece in an easily sectile material and **in that** the means for securing the container with the cell flange are formed by fingers (56) of the container rotatably engaging into ramps (58) of the cell flange, the cell flange including punching means (24, 26), the rotation following a first angle of rotation of the container relatively to the cell flange (8) causing advance of the container towards the punching means (24, 26) and, therefore separation by punching of the container door (16) and of the container flange (14), continuation of the rotation of the container following a second angle of rotation causing locking of the container door on the cell door.

3. The sealing transfer device according to claim 1 or 2, **characterized in that** one of the fingers (56) of the container flange drives into rotation a cleat (46), which in turn drives a lock (54), either directly or indirectly, this lock (54) being able to lock and unlock the cell door (10) on the cell flange (8), the device including a latch (66) able to pivot between a first position in which an axis (64) maintains the latch (66) outside a notch (68) made in the lock (54), and a second position in which the axis (64) moves aside, allowing the latch (66) to penetrate into the notch (68) of the lock, thereby immobilizing in rotation the actual lock, as well as the first and second pinion, and therefore the cleat (46).

4. The sealing transfer device according to claim 3, **characterized in that** the cleat (46) drives a shaft (48) into rotation, this shaft (48) being secured with a first pinion (50), this first pinion (50) in turn driving a second pinion (52) of a smaller diameter, this second pinion driving the lock (54).

5. The sealing transfer device according to one of claims 1 to 4, **characterized in that** the lid includes maintaining fingers (32) which penetrate into oblong apertures (34) formed in the floating portion (10a) of the cell door.

6. The sealing transfer device according to one of claims 2 to 5, **characterized in that** the punching means are formed by a removable and interchangeable punch (24) sealably mounted on the cell flange and **in that** the punch is covered by two gaskets (28, 30) which totally conceal it.

7. The sealing transfer device according to claim 6, **characterized in that** it includes a maintaining crown (38) attached by irreversible clipping on the container flange (14), this maintaining crown (38) maintaining the container door (16) against the force exerted by the punch.

8. The sealing transfer device according to claim 7, **characterized in that** the container door (16) includes notches into which are received protrusions (42) of the maintaining crown (38) in order to maintain the container door in rotation relatively to the maintaining crown.

9. The sealing transfer device according to one of claims 1 to 8, **characterized in that** the cell door includes lugs (96) and **in that** the container door includes grooves (98) into which the lugs (96) of the cell door will be able to be accommodated in order to secure the container door (16) with the cell door (10).

10. The sealing transfer device according to one of claims 8 or 9, **characterized in that** it includes a rotatably movable handle (69), a first roller being provided in the extension of the handle, this first roller (72) sliding in a bridge (77) for maintaining the handle in order to maintain it in a plane and to allow angular displacement of the handle, a second roller (64) including a convex head being provided in the extension of the first roller (72).

11. The sealing transfer device according to one of claims 1 to 10, **characterized in that** the container comprises an internal chute (120) formed by a sleeve ended with a closure, said chute avoiding the possibility that components (20) contained in the container come into contact with the head of the container during transfer of the latter into the cell.

12. The sealing transfer device according to one of claims 1 to 11, **characterized in that** the cell flange and the door may equally receive either a so-called unidirectional single-use container or a so-called multiple-use bidirectional container.
